# EUROPÄISCHE PATENTSCHRIFT

(11) **EP 2 226 660 B1**
(45) Veröffentlichungstag und Bekanntmachung des Hinweises auf die Patenterteilung: **06.04.2016**
(21) Anmeldenummer: 10001738.3
(22) Anmeldetag: 20.02.2010
(51) Int. Cl.: G02B 6/38, G02B 6/42

(54) **Steckverbinder für Lichtwellenleiter**
Connector for fibre optic cable
Connecteur à fiche pour fibre optique

(30) Priorität: 03.03.2009 DE 102009011388
(43) Veröffentlichungstag der Anmeldung: 08.09.2010
(73) Patentinhaber: HARTING Electronics GmbH, 32339 Espelkamp (DE)
(72) Erfinder: Hoffmann, Rita, 32369 Rahden (DE); Foss, Uwe, 32339 Espelkamp (DE)

(56) Entgegenhaltungen:
- DE-U1- 9 314 172
- US-A- 5 285 510
- US-A- 5 293 582
- US-A1- 2002 076 165
- US-B1- 6 485 194

## Beschreibung

Die Erfindung betrifft einen Steckverbinder für Lichtwellenleiter, insbesondere zur Steckung und Kontaktierung in einen mit einem opto-elektrischen Wandler ausgestatteten Gegenstecker.

Ein derartiger ausgeführter Steckverbinder wird benötigt, um zum Einen einen empfohlenen Mindestandruck des zu steckenden Lichtwellenleiters auf den opto-elektrischen Wandler im Gegenstecker zu realisieren, und zum Anderen, dass auch bei differierenden Abmaßen der Gegenstecker, durch einen zusätzlichen Schiebeweg der Lichtwellenleiter eine sichere Steckposition erreicht wird.

### Stand der Technik

Bei einzelnen Ferrulengehäusen, die direkt in eine Duplex-Anordnung eines mit einem opto-elektrischen Wandlers ausgerüsteten Gegensteckers eingesetzt werden, können an den Ferrulengehäusen angeformte Rastarme direkt und passgenau im Gehäuse des Gegensteckers verrastet werden.
Um jedoch eine komfortable Steckart - die zudem auch noch eine umweltgeschützte Steckung erfüllen soll - zu realisieren, wird zu dem normalen Wandler-Gehäuse, das zudem auf einer Leiterplatte montiert ist, ein Adapter- oder Anschraubgehäuse benötigt, in das ein entsprechend geschütztes LWL-Steckergehäuse mit darin enthaltenen Ferrulengehäusen steckbar ist.
Da sich durch die Aufnahme der Ferrulengehäuse in ein zusätzliches Steckergehäuse geänderte Steckdimensionen ergeben, ist eine korrekte optische Kontaktierung mit dem gleichen Gegenstecker nicht mehr gewährleistet.
Weiterhin können je nach Ausführung der Gegenstecker mit den opto-elektrischen Wandlern oder einem Steckeradapter.durchaus unterschiedliche Stecktiefen auftreten, so dass der vorzusehende Mindestandruck der Ferrulen an die Wandler oder eine "Gegenferrule" nicht gegeben ist.

Aus der US 6,540,410 ist ein LWL-Steckverbinder gekannt, welcher aus einem Steckergehäuse mit einem darin angeordneten Ferrulengehäuse besteht. Im Ferrulengehäuse ist ein in einer Ferrule eingebetteter Lichtwellenleiter axial verschiebbar angeordnet. Zusätzlich ist das Ferrulengehäuse im Steckergehäuse federbeaufschlagt axial verschiebbar gelagert.

### Aufgabenstellung

Der Erfindung liegt daher die Aufgabe zugrunde, einen Steckverbinder für Lichtwellenleiter derartig auszugestalten, dass bei unterschiedlichen Einstecktiefen innerhalb eines mit einem opto-elektrischen Wandler ausgerüsteten Gegensteckers oder auch eines Steckadapters, mittels eines zusätzlich axial verschiebbaren Gehäuseteiles innerhalb des Steckverbinders eine optimale Anpassung der Lichtwellenleiter erfolgt.

Diese Aufgabe wird durch die kennzeichnenden Merkmale des unabhängigen Anspruchs 1 gelöst.

Bei der Erfindung handelt es sich um einen Lichtwellenleiter-Steckverbinder der die bei unterschiedlichen Herstellern unterschiedlichen Einstecktiefen von mit opto-elektrischen Wandlern ausgerüsteten Gegenstecker ohne besondere Vorkehrungen automatisch ausregelt.
Wobei dies insbesondere bei Steckverbindungen unter schwierigen Umweltbedingungen vorgesehen ist.
Die gebräuchlichen Wandler-Steckverbinder, sind vorzugsweise auf Leiterplatten angeordnet und können mittels eines Adapter- oder Anschraubgehäuses mit einem Lichtwellenleiter-Steckverbinder kontaktiert werden. Vorteilhafterweise wird hierbei ein dem Push-Pull-Konzept genügendes Schiebegehäuse eingesetzt.

Bei Lichtwellenleiter-Steckverbindungen sollen die in Ferrulen gehaltenen Lichtwellenleiter mit einem empfohlenen Druck von etwa 5N gegeneinander gepresst werden, damit eine optimale Übertragung der optischen Signale gewährleistet ist.

Dazu sind die einzelnen Ferrulen mit einer axial wirkenden Feder zunächst in entsprechenden LWL-Ferrulengehäusen eingefügt, so dass ihre optischen Oberflächen, bei einer Kontaktierung mit einem Gegenstecker und bei korrekter Einstecktiefe mit dem jeweiligen Federdruck gegeneinander gedrückt werden.
Wird beim Verriegeln von zwei LWL-Steckverbindern keine korrekte Einstecktiefe erreicht, so ist unter Umständen keine Übertragung der Lichtwellensignale möglich.

Die mit der Erfindung erzielten Vorteile bestehen insbesondere darin, dass die federbeaufschlagten Ferrulen in ihren Ferrutengehäusen in dem Schiebegehäuse fixiert sind, so dass zunächst nur die Ferrulen mit den Lichtwellenleitern axial verschiebbar sind. Des Weiteren ist das Schiebegehäuse in einem Steckergehäuse um einen bestimmten axialen Weg verschiebbar gelagert, wobei der Schiebeweg mittels einer auf das Schiebegehäuse wirkenden Wellenfeder vorgegeben ist - unabhängig vom verrasteten Steckergehäuse.
Damit können in dieser Konfiguration Einstecktiefen mit Differenzen von insgesamt bis zu etwa 4 mm ausgeglichen werden.
Ein weiterer Vorteil ist durch die Ausführung des Steckergehäuses gegeben, der mit einer Schiebe-Hülse (Push-Pull-Prinzip) ausgeführt ist, so dass eine extrem einfache Steckung mit einer Verrastung erfolgt, wobei zusätzlich das Steckergehäuse mit entsprechenden Abdichteinrichtungen versehen ist, so dass diese LWL-Steckverbindung auch unter schwierigen Umweltbedingungen einsetzbar ist.

Um die unvermeidliche Krümmung des Lichtwellenleiters innerhalb des Steckergehäuses bei einer Verkürzung des Schiebeweges des Schiebegehäuses aufzufangen, ist eine gewisse Mindestlänge des Steckergehäuses erforderlich. Wobei innerhalb des Steckergehäuses vorteilhaft ein Kabelmanager eingefügt ist, der eine spezielle Formgebung aufweist, innerhalb der die Lichtwellenleiter durch das Steckergehäuse hindurchgeführt sind, so dass beim Verkürzen des Schiebeweges die Lichtwellenleiter eine bevorzugte Richtung zur Krümmung einnehmen, und so ein Mindest-Biegeradius nicht unterschritten wird.

### Ausführungsbeispiel

Ein Ausführungsbeispiel der Erfindung ist in der Zeichnung dargestellt und wird im folgenden näher erläutert. Es zeigen:
- Fig. 1: eine Explosionsdarstellung eines Lichtwellen-Steckverbinders,
- Fig. 2: eine Schnittdarstellung des Lichtwellen-Steckverbinders mit einem Gegenstecker,
- Fig. 3: eine Schnittdarstellung des Lichtwellenleiter-Steckverbinders mit normal ausgerichtetem Lichtwellenleiter, und
- Fig. 4: eine Schnittdarstellung des Lichtwellenleiter-Steckverbinders mit gekrümmtem Lichtwellenleiter.

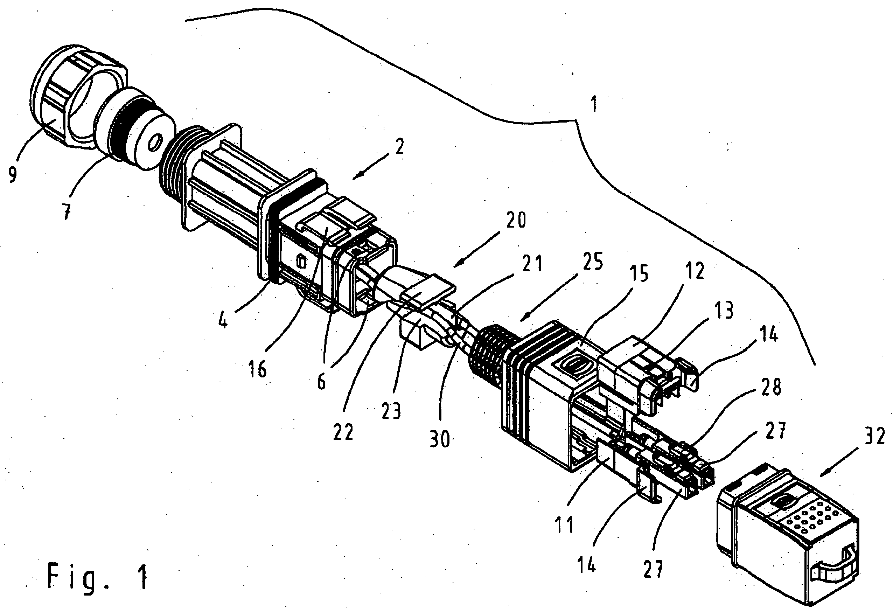

In der Fig.1 ist in einer Explosionszeichnung ein Steckverbinder 1 für Lichtwellenleiter 30 mit seinen einzelnen Teilen dargestellt.
Dabei ist hier von links nach rechts gezeigt: eine Druckschraube 9 mit einer Dichtung 7, die zur umweltdichten Verschraubung der hier noch nicht gezeigten Lichtwellenleiter im Steckergehäuse 2 erforderlich ist.
Darin enthalten ist ein weiter unter zu beschreibender Kabelmanager 20 sowie eine Wellenfeder 25 zum Einsatz im Steckgehäuse 2, sowie eine Schiebehülse 15 zum Ver- und Entriegeln des Steckverbinders 1 auf einem Gegenstecker 35.
Am kabelseitigen Ende des Steckergehäuses 2 ist eine umlauferide Dichtlippe 4 vorgesehen, die das Steckergehäuse zusammen mit der umgebenden Schiebehülse 15 gegen Umwelteinflüsse abdichtet.
Weiterhin ist ein zweiteiliges Schiebegehäuse 10 mit einer oberen Schalenhälfte 11 und einer unteren Schalenhälfte 12 gezeigt, innerhalb deren zwei Ferrulengehäuse 27 nebeneinander einfügbar sind.

Letztlich ist eine Schutzkappe 32 vorgesehen, die zum Schutz der empfindlichen optischen Austrittsflächen der Lichtwellenleiter 30, mit dem Steckergehäuse 2 steckseitig verrastbar ist.
Nach dem Einsetzen der Ferrulengehäuse 27, zunächst in die hier untere Schalenhälften 11 und dem Abdecken mit der oberen Schalenhälfte 12, werden an den Ferrulengehäuse 27 angeformte Rastarme 28 innerhalb des jetzt gebildeten Schiebegehäuses 10 arretiert.
Anschließend wird das Schiebegehäuse 10 in das Steckergehäuse 2 eingeschoben und mittels zwei Rasthaken 13, je ein Rasthaken an der unteren Schalenhälfte 11 und einer an der oberen Schalenhälfte 12 in zwei entsprechenden länglichen Rastöffnungen 6 im Steckergehäuse 2, bereits unter einem leichten Druck gegen die Wellenfeder 25 verrastet.
Die länglichen Rastöffnungen 6 begrenzen letztlich den Schiebeweg des Schiebegehäuses 10 im Steckergehäuse 2.

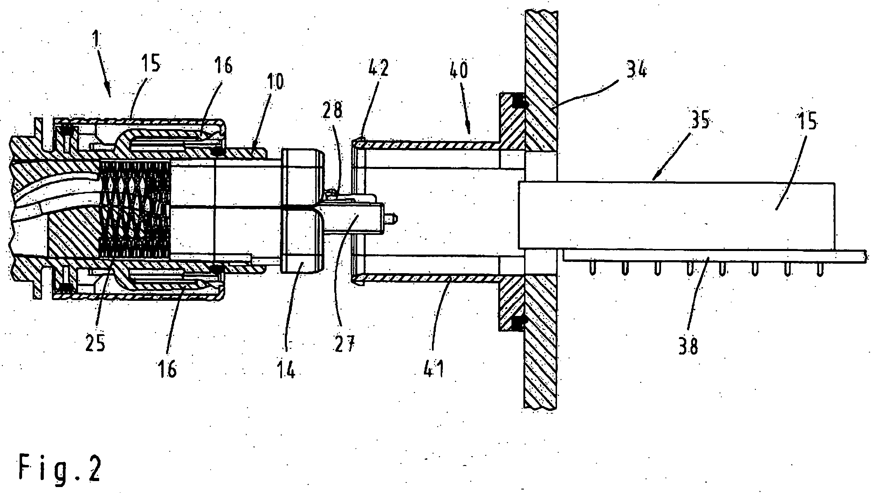

Die Fig. 2 zeigt den Steckverbinder 1 in einer Schnittdarstellung zusammen mit dem Gegenstecker 35, der opto-elektrische Wandler 36 aufweist und mittels eines Anschraubgehäuses 40 an einer Wandöffnung einer Montagewand 34 gehalten ist.
Zur Ankopplung der Lichtwellenleiter an die opto-elektrischen Wandler wird der Steckverbinder auf die kragenförmige Hülse 41 des Anschraubgehäuses 40 aufgeschoben. Dabei wirken die beiden seitlichen Kragen 14 am Schiebegehäuse 10 als Führungsschienen innerhalb der Hülse 41 des Anschraubgehäuses 40 zum einfachen und sicheren Aufstecken auf den Gegenstecker 35.
Dabei kann der Gegenstecker auch als Kupplung zur Verbindung mit weiteren Lichtwellenleitern ausgebildet sein.
Mit Abschluss des Steckvorganges klinken die Arretierungsarme 16 der Schiebehülse 15 an einem Hinterschitt 42 im Anschraubgehäuse 40 ein.

Während die Maßhaltigkeit des Anschraubgehäuses 40 auf das der Steckverbinder 1 aufgeschoben wird, exakt einzuhalten ist, sind Maßtoleranzen zumal bei unterschiedlichen Herstellern zwischen dem Anschraubgehäuse 40, der Montagewand 34 und dem Gegenstecker 35, der zudem auf einer Leiterplatte 38 aufgebracht ist, sowie den opto-elektrischen Wandlern im Gegenstecker 35 unvermeidlich.
Auch können durch unterschiedliche geometrische Anordnung der opto-elektrischen Wandler im Gegenstecker 35 unterschiedliche Einstecktiefen für einen Lichtwellenleiter-Steckverbinder 1 auftreten, so dass eine korrekte optische Ankopplung nicht so ohne weiteres gewährleistet ist.

Um diesem vorzubeugen ist in dem Steckergehäuse 2 ein um einen bestimmten Weg axial verschiebbares Schiebegehäuse 10 mit den darin gehaltenen Ferrulengehäusen 27 vorgesehen.
So dass neben den bereits axial verschiebbaren Ferrulen innerhalb der Ferrulengehäuse 27 ein zusätzlicher Schiebeweg 18 für eine sichere Kontaktierung zwischen den Austrittsflächen der Lichtwellenleiter 30 und den opto-elektrischen Wandlern 36 im Gegenstecker 35 zur Verfügung steht.

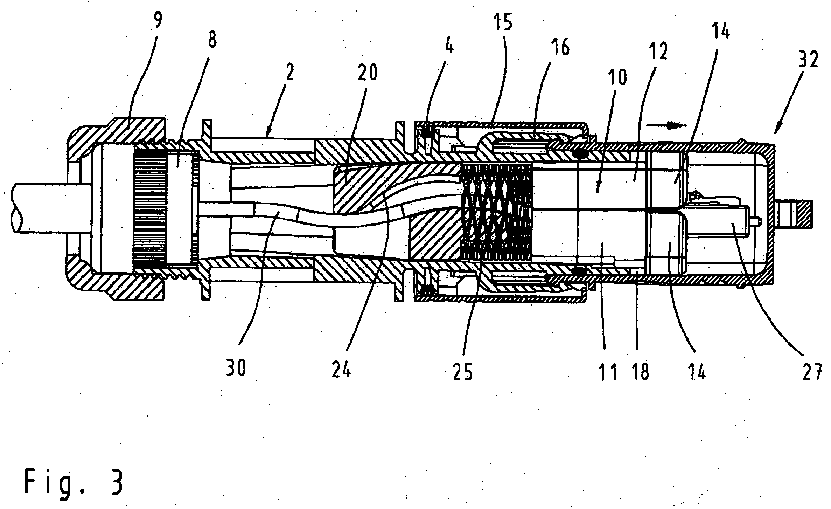

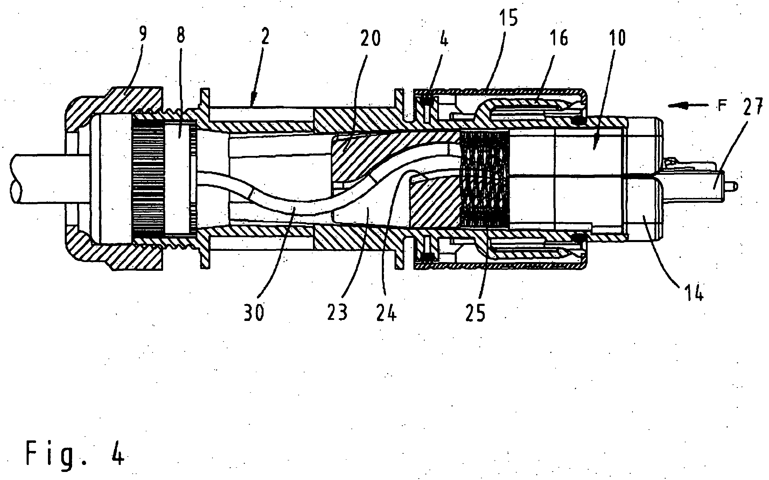

In den Fig. 3 und Fig. 4 ist in einem hier senkrechten Schnitt zu der Darstellung in Fig. 1, eine Darstellung des Steckverbinders 1 mit dem Steckergehäuse 2 und den darin enthaltenen Lichtwellenleitern 30 gezeigt.
Weiterhin ist in der Fig. 3 gezeigt, wie eine separate Schutzkappe 32 auf dem Steckergehäuse 2 verrastet ist.

Die Fig. 3 zeigt, wie das Schiebegehäuse 10 durch die Wellenfeder 25 komplett in die vordere Stellung - Schiebeweg 18 ist sichtbar - in Steckrichtung gedrückt ist, während in der Fig. 4 das Schiebegehäuse 10 durch eine äußere - durch F markierte Druckbeaufschlagung in die hintere Stellung geschoben, dargestellt ist.

Dabei ist der Lichtwellenleiter 30 im Inneren des Steckergehäuses 3 relativ stark gekrümmt (im Rahmen des technisch sinnvollen) dargestellt.
Um diese Krümmung in einem gewissen Umfang vorgeben zu können, ist innerhalb des Steckergehäuses 2 ein speziell ausgebildeter Kabelmanager 20 eingefügt.

Der Kabelmanager 20 weist eine zylindrisch-längliche Form auf und ist so innerhalb des Steckergehäuses 2 positioniert, dass eine erste, leicht konisch geformte Hälfte in Richtung der Kabeldichtung 7 zeigt und eine zweite, zylindrisch geformte Hälfte in die Wellenfeder 25 hineinreicht.
Zwischen den beiden Hälften ist ein quadratischer Bund 22 geformt, wobei die eine Seite an einem rückwärtigen Anschlag (hier nicht gezeigt) im Steckergehäuse 2 anliegt während an der anderen Seite des Bundes 22 die Wellenfeder 23 anliegt.
Weiterhin sind im Kabelmanager 20 zwei axial verlaufende Längsöffnungen 23 vorgesehen, die durch eine mittlere Trennwand 21 gebildet sind. In die Längsöffnungen 23 ist je ein Lichtwellenleiter 30 seitlich einsetzbar. (siehe dazu auch Fig. 1)
Wobei die Lichtwellenleiter 30 mittels entsprechenden gekrümmten Ausformung 24 in den Längsöffnungen 23 so geführt sind, dass sie bei einem zurückgeschobenen Schiebegehäuse 10 eine gewisse, definierte Krümmung annehmen und damit eine Verkürzung der Länge innerhalb des Steckergehäuses, entsprechend dem Schiebeweg (18) des Schiebegehäuses 10 zulassen.

## Patentansprüche

1. Steckverbinder (1) für in Ferrulen gehaltene Lichtwellenleiter (30), insbesondere zur Steckung und Kontaktierung in einen mit einem opto-elektrischen Wandler ausgestatteten Gegenstecker (35),
wobei der Steckverbinder (1) ein Steckergehäuse (2) umfasst, in dem in einem Schiebegehäuse (10) zwei Ferrulengehäuse (27), mit in
Ferrulen eingebetteten Lichtwellenleitern (30) angeordnet sind, wobei die Ferrulen mittels in den Ferrulengehäusen (27) angeordneten Federn axial verschiebbar sind,
wobei das Schiebegehäuse (10) mit den zwei darin gehaltenen Ferrulengehäusen (27) mittels einer axial wirkenden Feder um einen zusätzlichen Schiebeweg innerhalb des sie gemeinsam umgebenden Steckergehäuses (2) axial verschiebbar angeordnet ist,
wobei eine durch den Schiebeweg (18) des Schiebegehäuses (10) erforderliche Krümmung der Lichtwellenleiter (30) innerhalb des umgebenden Steckergehäuses (2) mittels eines dazu im Steckergehäuse (2) angeordneten Kabelmanagers (20) unterstützt wird, der für die Lichtwellenleiter (30) zwei seitlich offene Längsöffnungen (23) aufweist.

2. Steckverbinder nach Anspruch 1, **dadurch gekennzeichnet,**
**dass** die im Steckergehäuse (2) angeordnete und auf das Schiebegehäuse (10) axial wirkende Feder als Wellenfeder (25) ausgebildet ist.

3. Steckverbinder nach Anspruch 1, **dadurch gekennzeichnet,**
**dass** das Steckergehäuse (2) von einer axial verschiebbaren Schiebehülse (15) umgeben ist.

4. Steckverbinder nach Anspruch 1, **dadurch gekennzeichnet,**
**dass** die beiden Längsöffnungen (23) im Kabelmanager (20) mittels einer Trennwand (21) realisiert sind.

5. Steckverbinder nach Anspruch 4, **dadurch gekennzeichnet,**
**dass** in den Längsöffnungen (23) ausgeprägte Ausformungen (24) bei einer Verschiebung des Schiebegehäuses (10) entgegen der Steckrichtung, eine definierte Auslenkung der Lichtwellenleiter (30) bewirken.

6. Steckverbinder nach Anspruch 1, **dadurch gekennzeichnet,**
**dass** der axiale Schiebeweg (18) des Schiebegehäuses (10) innerhalb des Steckergehäuses (2), durch die Länge von Rastöffnungen (6) im Steckergehäuse (2) festgelegt ist.

7. Steckverbinder nach einem der Ansprüche 1 - 6, **dadurch gekennzeichnet,**
**dass** Einstecktiefen mit Differenzen von insgesamt bis zu etwa 4 mm ausgeglichen werden können.

## Claims

1. A plug connector (1) for optical waveguides (30) held in ferrules, in particular for plugging in and contacting with a mating plug (35) provided with an optoelectric transducer,
the plug connector (1) comprising a plug housing (2) in which two ferrule housings (27) with optical waveguides (30) embedded in ferrules are arranged in a sliding housing (10), the ferrules being axially displaceable by means of springs arranged in the ferrule housings (27),
the sliding housing (10) with the two ferrule housings (27) held therein being arranged so as to be axially displaceable within the plug housing (2) surrounding them jointly by an additional sliding path by means of an axially acting spring,
a curvature, required by the sliding path (18) of the sliding housing (10), of the optical waveguides (30) within the surrounding plug housing (2) being assisted by a cable manager (20) which is arranged in the plug housing (2) for this purpose and which includes two laterally open longitudinal openings (23) for the optical waveguides (30).

2. The plug connector according to claim 1, **characterized in that** the spring arranged in the plug housing (2) and axially acting on the sliding housing (10) is formed as a wave spring (25).

3. The plug connector according to claim 1, **characterized in that** the plug housing (2) is surrounded by an axially displaceable sliding sleeve (15).

4. The plug connector according to claim 1, **characterized in that** the two longitudinal openings (23) in the cable manager (20) are implemented by means of a partition (21).

5. The plug connector according to claim 4, **characterized in that** formations (24) shaped in the longitudinal openings (23) bring about a defined deflection of the optical waveguides (30) when the sliding housing (10) is displaced contrary to the plug-in direction.

6. The plug connector according to claim 1, **characterized in that** the axial sliding path (18) of the sliding housing (10) within the plug housing (2) is determined by the length of detent openings (6) in the plug housing (2).

7. The plug connector according to any of claims 1 to 6, **characterized in that** insertion depths having differences of a total of up to about 4 mm can be compensated.

## Revendications

1. Connecteur enfichable (1) pour des guides d'ondes optiques (30) retenus dans des embouts, en particulier pour l'enfichage et la mise en contact dans un connecteur antagoniste (35) équipé d'un transducteur opto-électrique,
le connecteur enfichable (1) comportant un boîtier de connexion (2) dans lequel deux boîtiers d'embout (27) avec des guides d'ondes optiques (30) insérés dans des embouts sont agencés dans un boîtier coulissant (10), les embouts étant axialement déplaçables au moyen de ressorts agencés dans les boîtiers d'embout (27),
le boîtier coulissant (10) avec les deux boîtiers d'embout (27) retenus dans celui-ci étant agencé axialement déplaçable sur un trajet coulissant additionnel à l'intérieur du boîtier de connexion (2) les entourant communément au moyen d'un ressort à action axiale,
une courbe des guides d'ondes optiques (30) à l'intérieur du boîtier de connexion (2) entourant, laquelle est nécessaire en raison du trajet coulissant (18) du boîtier coulissant (10), étant soutenue par un gestionnaire de câbles (20) qui est agencé à cet effet dans le boîtier de connexion (2) et qui présente deux orifices longitudinaux (23) ouverts latéralement pour les guides d'ondes optiques (30).

2. Connecteur enfichable selon la revendication 1, **caractérisé**
**en ce que** le ressort agencé dans le boîtier de connexion (2) et agissant axialement sur le boîtier coulissant (10) est réalisé sous forme de ressort sinueux (25).

3. Connecteur enfichable selon la revendication 1, **caractérisé**
**en ce que** le boîtier de connexion (2) est entouré d'une douille coulissante (15) axialement déplaçable.

4. Connecteur enfichable selon la revendication 1, **caractérisé**
**en ce que** les deux orifices longitudinaux (23) dans le gestionnaire de câbles (20) sont réalisés au moyen d'une cloison (21).

5. Connecteur enfichable selon la revendication 4, **caractérisé**
**en ce que** des conformations (24) formées dans les orifices longitudinaux (23) provoquent une déviation définie des guides d'ondes optiques (30) lors d'un déplacement du boîtier coulissant (10) à l'encontre du sens d'enfichage.

6. Connecteur enfichable selon la revendication 1, **caractérisé**
**en ce que** le trajet coulissant axial (18) du boîtier coulissant (10) à l'intérieur du boîtier de connexion (2) est déterminé par la longueur d'orifices d'enclenchement (6) dans le boîtier de connexion (2).

7. Connecteur enfichable selon l'une des revendications 1 à 6, **caractérisé**
**en ce qu'**il est possible d'équilibrer des profondeurs d'enfichage présentant des différences jusqu'à environ 4 mm au total.
